# FASCICULE DE BREVET EUROPEEN

(11) **EP 3 863 869 B1**
(45) Date de publication et mention de la délivrance du brevet: **26.10.2022**
(21) Numéro de dépôt: 19787036.3
(22) Date de dépôt: 12.09.2019
(51) Int. Cl.: B60G 7/04, B60G 13/18, F16F 9/49, F16F 7/10, F16F 13/10

(54) **BUTEE HYDRAULIQUE A INERTIE DE FIN DE COURSE DE SUSPENSION DE VEHICULE AUTOMOBILE**
INERTIALE HYDRAULISCHE ENDANSCHLAGSBEGRENZUNG FÜR EINE KRAFTFAHRZEUGAUFHÄNGUNG
INERTIAL HYDRAULIC END-OF-TRAVEL STOP FOR A MOTOR VEHICLE SUSPENSION

(30) Priorité: 12.10.2018 FR 1859461
(43) Date de publication de la demande: 18.08.2021
(73) Titulaire: PSA Automobiles SA, 78300 Poissy (FR)
(72) Inventeur: CHILLON, Jean, 92100 BOULOGNE BILLANCOURT (FR); DIMITRIJEVIC, Zoran, 91570 BIEVRES (FR); ROTA, Laurent, 91530 ST CHERON (FR); MONTEIL, Christophe, 91640 BRIIS SOUS FORGES (FR)
(86) Numéro de dépôt international: PCT/FR2019/052119
(87) Numéro de publication internationale: WO 2020/074798

(56) Documents cités:
- EP-A2- 1 155 884
- DE-A1- 3 710 629
- DE-B3-102008 042 251
- FR-A1- 2 448 673
- FR-A1- 3 066 571
- GB-A- 1 358 691

## Description

La présente invention concerne une butée hydraulique de suspension de véhicule automobile selon le préambule de la revendication 1, ainsi qu'un véhicule automobile comportant des suspensions équipées de ce type de butée. Un exemple d'une telle butée est divulgué par le document GB 1 358 691 A.

Les véhicules automobiles comportent pour chaque roue une suspension comprenant un ressort de suspension, et un amortisseur télescopique hydraulique qui freine les mouvements de cette suspension.

L'amortisseur hydraulique comporte généralement un piston coulissant dans un corps, fixé à l'extrémité d'une tige, séparant deux chambres de part et d'autre de ce piston, équipé de passages calibrés permettant des freinages différenciés suivant la direction du mouvement.

La suspension comporte généralement des butées de fin de course extérieures en élastomère, formant des tampons présentant une forte raideur qui arrêtent de manière brutale la fin de course en cas de choc important sur la suspension, avec un confort médiocre.

En complément la suspension peut comporter une butée hydraulique de fin de course de compression intégrée dans l'amortisseur, qui en cas de choc important sur la suspension arrête progressivement la fin de course de ce mouvement en fonction de sa vitesse.

On peut de cette manière prévoir une raideur plus faible du ressort de suspension et un faible freinage de l'amortisseur sur une partie importante de sa course, assurant un meilleur filtrage des vibrations venant des petites irrégularités de la route, et utiliser la butée hydraulique sur une fin de course pour absorber l'énergie restant en cas d'effort important sur la suspension.

Toutefois en cas de route fortement dégradée, ou d'obstacles importants comme des ralentisseurs formant un bossage en travers de la route, on peut obtenir des mouvements de caisse importants avec des fortes accélérations avant d'atteindre la butée hydraulique de fin de course, qui sont préjudiciables au confort.

La présente invention a notamment pour but d'éviter ces inconvénients de la technique antérieure.

Elle propose à cet effet une butée hydraulique de fin de course de suspension de véhicule automobile, comprenant une chambre de compression disposée suivant un axe principal, qui se comprime en recevant une force axiale de compression réduisant son volume intérieur, cette chambre de compression étant reliée à un réservoir par un passage de fluide qui est freiné, cette butée étant remarquable en ce que la chambre de compression comporte une paroi extérieure souple se déformant en réduisant son volume sous l'effet de la force axiale, et en ce que le passage de fluide freiné comporte une colonne de fluide à inertie.

Un avantage de cette butée hydraulique est que de manière simple, on peut réaliser en prévoyant un volume suffisant de la chambre de compression une course relativement importante de la butée de fin de course permettant d'accompagner la fin du mouvement avec un freinage qui s'oppose à la fois à la vitesse par une certaine restriction du passage de fluide, et à l'accélération par la masse de la colonne à inertie mise en mouvement. On obtient de manière intégrée dans un seul ensemble, une grande progressivité de freinage du mouvement.

La butée hydraulique selon l'invention peut de plus comporter une ou plusieurs des caractéristiques suivantes, qui peuvent être combinées entre elles.

Avantageusement, le réservoir comporte une enveloppe élastique formant un ressort qui tend à renvoyer le fluide vers la chambre de compression.

Dans ce cas, avantageusement la butée comporte une cloison de séparation séparant la chambre de compression du réservoir, recevant de chaque côté sur son contour le bord de la paroi extérieure souple de la chambre de compression, et de l'enveloppe élastique du réservoir.

De plus, avantageusement la cloison de séparation contient la colonne à inertie formant le passage de fluide freiné.

Avantageusement, la paroi extérieure souple de la chambre de compression comporte une excroissance souple tournée vers l'extérieur recevant la force axiale de compression.

Avantageusement, la chambre de compression comporte un tampon intérieur en élastomère d'arrêt de fin de course.

Avantageusement, la butée comporte des passages restreints complémentaires entre la chambre de compression et le réservoir, comprenant un clapet de retour laissant un passage libre vers cette chambre de compression.

Avantageusement, la butée comporte un clapet de limitation de pression dans la chambre de compression, dirigeant une surpression vers le réservoir.

Avantageusement, la butée comporte une membrane de découplage présentant une faible raideur, séparant la chambre de compression du réservoir, qui est disposée entre deux butées axiales.

L'invention a aussi pour objet un véhicule automobile équipé de suspensions comportant des butées hydrauliques comprenant l'une quelconque des caractéristiques précédentes.

L'invention sera mieux comprise et d'autres caractéristiques et avantages apparaîtront plus clairement à la lecture de la description ci-après donnée à titre d'exemple et de manière non limitative, en référence aux dessins annexés dans lesquels :
- la figure 1 est un schéma en coupe axiale d'une butée hydraulique selon l'invention ;
- la figure 2 est un schéma en coupe transversale d'une butée suivant une variante, passant par la cloison de séparation entre la chambre de compression et le réservoir ;
- la figure 3 est un graphique présentant pour différents types de suspension, la réponse de la caisse du véhicule en fonction de la fréquence d'excitation de la suspension ; et
- la figure 4 est un graphique présentant en fonction du temps, les accélérations verticales de la caisse pour ces types de suspension.

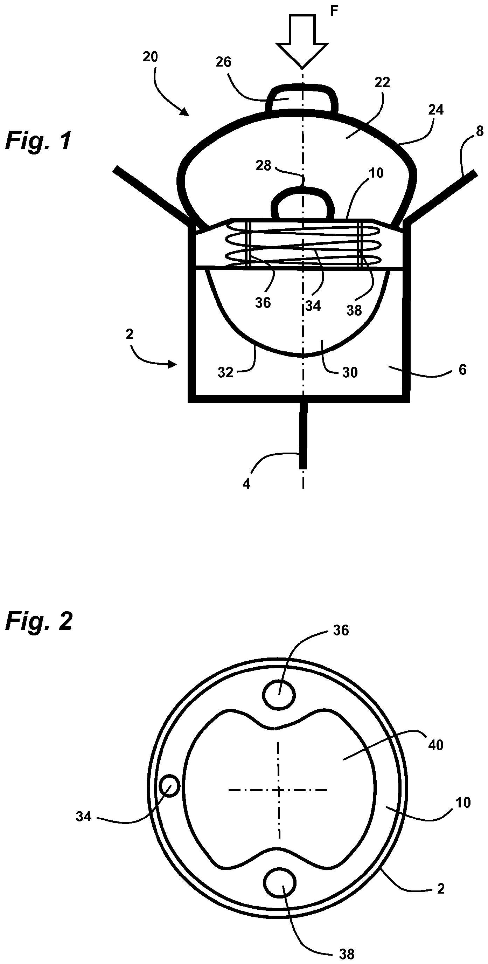

La figure 1 présente une butée de fin de course présentant une symétrie axiale verticale, comportant un support 2 formant un boîtier 6 équipé à sa base d'une tige de fixation 4 sur un train du véhicule, en particulier sur le train arrière soumis à des fortes variations de charge dans le cas d'un chargement du coffre.

Le boîtier 6 du support 2 est fermé en partie supérieure par une cloison de séparation 10, entouré par une coupelle rigide conique 8 s'ouvrant vers le haut avec un angle faible.

Un vérin en élastomère 20 comporte une paroi extérieure souple 24 arrondie contenant une chambre de compression 22, dont la base est fixée autour de la cloison de séparation 10 pour fermer cette chambre. Un réservoir inférieur 30 disposé dans le boîtier 6 comporte une enveloppe élastique 32 fixée en partie supérieure sur le contour inférieur de la cloison de séparation 10.

La cloison de séparation 10 comporte des passages de fluide freinés entre la chambre de compression 22 et le réservoir inférieur 30, comprenant une colonne de fluide enroulée en spirale 34, formée dans l'épaisseur de cette cloison, et des passages restreints 36, 38 traversant cette cloison.

La colonne de fluide 34 présente une section et une longueur donnant à la fois un volume intérieur correspondant à une masse de fluide qui va être mise en mouvement, pour lors de son accélération réaliser un freinage par effet d'inertie s'opposant à l'accélération, et une restriction de passage freinant la vitesse de ce mouvement.

Les passages restreints peuvent comporter en particulier un passage avec restriction 36 dans les deux sens vers le réservoir 30, qui s'additionne au passage de la colonne de fluide 34 pour freiner ce passage suivant des caractéristiques différentes en fonction de la vitesse, et un clapet de retour 38 laissant un passage libre venant de ce réservoir vers la chambre de compression 22, afin de permettre une remise en condition rapide après le fonctionnement de la butée de fin de course alors que la suspension remonte.

L'enveloppe élastique 32 du réservoir inférieur 30 présente une raideur suffisante pour, après un arrêt de la fin de course de la suspension, lors de sa remontée pousser le fluide vers la chambre de compression 22 afin de la remplir à nouveau.

Le sommet de la paroi extérieure souple 24 comporte un tampon externe 26 formé par une excroissance de cette paroi dépassant sur le dessus, recevant une force F d'un élément de la suspension proche de sa fin de course. Le tampon externe 26 forme une première raideur de faible pente qui permet une prise de contact en souplesse de l'élément de suspension sur la butée de fin de course, afin notamment d'éviter des bruits.

La cloison de séparation 10 comporte sur le dessus un tampon interne en élastomère 28 formant une dernière raideur de forte pente, qui permet d'immobiliser complètement la fin du mouvement de la suspension en cas de choc important sur elle avec un niveau d'énergie élevée, après que la chambre de compression 22 se soit vidée.

La paroi extérieure souple 24 présente une résistance à l'allongement qui, avec le guidage de la coupelle conique 8 limitant son expansion latérale lors de son écrasement, permet de transformer de manière sensiblement linéaire la descente du sommet de cette paroi sous l'effet de la force F, en un débit du fluide vers le réservoir 30 en passant par les passages freinés 34, 36, 38.

On obtient un freinage très progressif de la fin de course de la suspension, dépendant fortement de la vitesse de la suspension à ce moment grâce au freinage par inertie de la colonne de fluide 34 absorbant une énergie pour se mettre en mouvement.

En complément la cloison de séparation 10 peut comporter un clapet de limitation de pression, comprenant un ressort de tarage qui au-delà d'un seuil de pression élevé ouvre un passage vers le réservoir 30 afin de limiter les surpressions dans la chambre de compression 22 pour éviter des ruptures d'organes.

La butée hydraulique à inertie peut s'implanter facilement sur tous types de véhicules, à la place de la butée en élastomère extérieure généralement utilisée en parallèle du ressort et de l'amortisseur. Sa conception est simple, elle reprend une technologie déjà utilisée dans certains types de support moteur élastique, comprenant aussi dans une enveloppe en élastomère formant une chambre de compression un fluide passant dans une colonne à inertie. De plus aucun système de pilotage extérieur ne complique cette butée.

La figure 2 présente la cloison de séparation 10 contenant sur deux côtés diamétralement opposés le passage avec restriction 36 et le clapet de retour 38, et dans sa partie centrale une membrane de découplage 40 présentant une faible raideur, séparant la chambre de compression 22 du réservoir 30, qui est disposée entre deux butées axiales lui assurant une faible course afin de filtrer seulement les vibrations à moyenne fréquence. En particulier on peut disposer la membrane de découplage 40 à l'intérieur d'un serpentin formé par la colonne de fluide 34.

La membrane de découplage avec ses butées axiales lui assurant une faible course, permet un transfert libre d'un petit volume de fluide limité par ces butées, entre la chambre de compression 22 et le réservoir 30.

On obtient de cette manière en cas de petites oscillations du mouvement lors du fonctionnement de la butée de fin de course, formant des vibrations, un freinage très faible de ces oscillations ce qui évite de les transmettre à la caisse du véhicule, et assure un niveau de confort élevé.

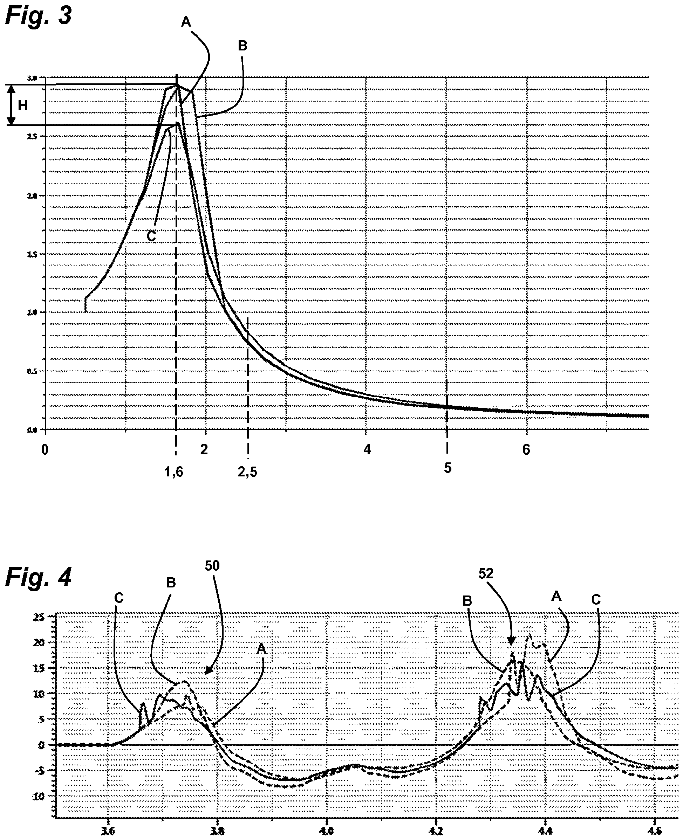

La figure 3 présente une simulation donnant en fonction de la fréquence d'excitation de la suspension exprimée en Hertz, la réponse de la caisse du véhicule pour un premier type de suspension A comprenant un ressort habituellement utilisé et un freinage de l'amortisseur faible, et un deuxième type de suspension B comprenant un ressort à raideur réduite et un freinage de l'amortisseur plus faible, comprenant une butée hydraulique de freinage de la fin de course.

Un troisième type de suspension C comporte un ressort à raideur réduite comme pour le deuxième type de suspension B, un amortisseur à freinage encore plus réduit sur l'ensemble de sa course, et une butée hydraulique à inertie de fin de course suivant l'invention.

On constate que pour une excitation à 1,6Hz correspondant à une fréquence de rebond de la suspension, le freinage inertiel de la butée permet de réduire l'amplitude d'une valeur H ce qui diminue l'accélération de la caisse et améliore le confort.

On obtient une bonne tenue de caisse dans la gamme de fréquence comprise entre 0,5 et 2,5Hz, par exemple sur route déformée, sans dégradation du filtrage entre 2,5 et 5Hz.

La figure 4 présente en fonction du temps exprimé en secondes, l'accélération verticale de la caisse du véhicule pour son passage sur une route fortement déformée comprenant deux bosses passées à environ 0,6s d'intervalle.

Pour le premier type de suspension A on a pour la deuxième bosse 52 l'accélération maximum la plus forte. Pour le deuxième type de suspension B on a pour la première bosse 50 l'accélération maximum la plus forte. Pour la troisième suspension C on a à la fois pour la première 50 et la deuxième bosse 52, l'accélération maximum qui est la plus faible.

D'une manière générale la butée hydraulique à inertie selon l'invention permet d'améliorer le confort de filtrage en diminuant le freinage de l'amortisseur sur l'ensemble de la course de la suspension. La membrane de découplage 40 servant pour les oscillations à moyenne fréquence permet de conserver un bon niveau de filtration de ces fréquences. On obtient sur les bonnes routes un système à inertie qui ne s'enclenche pas, filtrant très bien les vibrations.

Pour les fortes accélérations de la caisse mettant en oeuvre la colonne à inertie 34, on a un bon niveau de freinage ce qui réduit ces accélérations.

## Revendications

1. Butée hydraulique de fin de course de suspension de véhicule automobile, comprenant une chambre de compression (22) disposée suivant un axe principal, qui se comprime en recevant une force axiale de compression (F) réduisant son volume intérieur, cette chambre de compression (22) étant reliée à un réservoir (32) par un passage de fluide (34) qui est freiné, la chambre de compression (22) comportant une paroi extérieure souple (24) se déformant en réduisant son volume sous l'effet de la force axiale (F), **caractérisée en ce que** le passage de fluide freiné (34) comporte une colonne de fluide à inertie.

2. Butée hydraulique selon la revendication 1, **caractérisée en ce que** le réservoir (30) comporte une enveloppe élastique (32) formant un ressort qui tend à renvoyer le fluide vers la chambre de compression (22).

3. Butée hydraulique selon la revendication 2, **caractérisée en ce qu'**elle comporte une cloison de séparation (10) séparant la chambre de compression (22) du réservoir (30), recevant de chaque côté sur son contour le bord de la paroi extérieure souple (24) de la chambre de compression (22), et de l'enveloppe élastique (32) du réservoir (30).

4. Butée hydraulique selon la revendication 3, **caractérisée en ce que** la cloison de séparation (10) contient la colonne à inertie formant le passage de fluide freiné (34).

5. Butée hydraulique selon l'une quelconque des revendications précédentes, **caractérisée en ce que** la paroi extérieure souple (24) de la chambre de compression (22) comporte une excroissance souple tournée vers l'extérieur (26) recevant la force axiale de compression (F).

6. Butée hydraulique selon l'une quelconque des revendications précédentes, **caractérisée en ce que** la chambre de compression (22) comporte un tampon intérieur en élastomère (28) d'arrêt de fin de course.

7. Butée hydraulique selon l'une quelconque des revendications précédentes, **caractérisée en ce qu'**elle comporte des passages restreints complémentaires (36, 38) entre la chambre de compression (22) et le réservoir (30), comprenant un clapet de retour laissant un passage libre vers cette chambre de compression (22).

8. Butée hydraulique selon l'une quelconque des revendications précédentes, **caractérisée en ce qu'**elle comporte un clapet de limitation de pression dans la chambre de compression (22), dirigeant une surpression vers le réservoir (30).

9. Butée hydraulique selon l'une quelconque des revendications précédentes, **caractérisée en ce qu'**elle comporte une membrane de découplage (40) présentant une faible raideur, séparant la chambre de compression (22) du réservoir (30), qui est disposée entre deux butées axiales.

10. Véhicule automobile équipé de suspensions, **caractérisé en ce que** ces suspensions comportent des butées hydrauliques selon l'une quelconque des revendications précédentes.

## Patentansprüche

1. Hydraulischer Endanschlag für eine Kraftfahrzeugfederung mit einem entlang einer Hauptachse angeordneten Kompressionsraum (22), der durch Aufnahme einer sein Innenvolumen reduzierenden axialen Kompressionskraft (F) komprimiert wird, wobei dieser Kompressionsraum (22) verbunden ist zu einem Reservoir (32) durch einen Fluidkanal (34), der gebremst wird, wobei die Kompressionskammer (22) eine flexible Außenwand (24) aufweist, die sich verformt, indem sie ihr Volumen unter der Wirkung der axialen Kraft (F) verringert, **dadurch gekennzeichnet, dass** der Bremsflüssigkeitskanal (34) eine Trägheitsflüssigkeitssäule umfasst.

2. Hydraulisches Drucklager nach Anspruch 1, **dadurch gekennzeichnet, dass** der Behälter (30) ein elastisches Gehäuse (32) umfasst, das eine Feder bildet, die dazu neigt, das Fluid in die Kompressionskammer (22) zurückzuführen.

3. Hydraulisches Drucklager nach Anspruch 2, **dadurch gekennzeichnet, daß** es eine den Verdichtungsraum (22) vom Vorratsbehälter (30) trennende Trennwand (10) aufweist, die auf jeder Seite an ihrer Kontur den Rand der flexiblen Außenwand (24) aufnimmt der Kompressionskammer (22) und des elastischen Gehäuses (32) des Tanks (30).

4. Hydraulisches Drucklager nach Anspruch 3, **dadurch gekennzeichnet, daß** die Trennwand (10) die den Bremsflüssigkeitskanal (34) bildende Trägheitssäule enthält.

5. Hydraulisches Drucklager nach einem der vorangehenden Ansprüche, **dadurch gekennzeichnet, dass** die flexible Außenwand (24) der Kompressionskammer (22) einen flexiblen, nach außen weisenden Vorsprung (26) umfasst, der die axiale Kompressionskraft (F) aufnimmt.

6. Hydraulisches Drucklager nach einem der vorhergehenden Ansprüche, **dadurch gekennzeichnet, dass** die Kompressionskammer (22) einen internen Elastomerpuffer (28) zum Stoppen des Hubendes umfasst.

7. Hydraulisches Drucklager nach einem der vorhergehenden Ansprüche, **dadurch gekennzeichnet, dass** es komplementäre verengte Durchgänge (36, 38) zwischen der Kompressionskammer (22) und dem Reservoir (30) umfasst, die ein Rückschlagventil umfassen, das einen Durchgang für diese Kompression freilässt Kammer (22).

8. Hydraulisches Drucklager nach einem der vorangehenden Ansprüche, **dadurch gekennzeichnet, dass** es ein Druckbegrenzungsventil in der Kompressionskammer (22) umfasst, das einen Überdruck zum Reservoir (30) leitet.

9. Hydraulisches Drucklager nach einem der vorangehenden Ansprüche, **dadurch gekennzeichnet, dass** es eine Entkopplungsmembran (40) mit geringer Steifigkeit umfasst, die den Kompressionsraum (22) von dem Reservoir (30) trennt, das axial zwischen zwei Axiallagern angeordnet ist.

10. Mit Aufhängungen ausgestattetes Kraftfahrzeug, **dadurch gekennzeichnet, dass** diese Aufhängungen hydraulische Anschläge nach einem der vorhergehenden Ansprüche umfassen.

## Claims

1. Hydraulic end-of-travel stop for motor vehicle suspension, comprising a compression chamber (22) arranged along a main axis, which is compressed by receiving an axial compression force (F) reducing its interior volume, this compression chamber (22 ) being connected to a reservoir (32) by a fluid passage (34) which is braked, the compression chamber (22) comprising a flexible outer wall (24) deforming by reducing its volume under the effect of the axial force (F), **characterized in that** the braked fluid passage (34) comprises an inertial fluid column.

2. Hydraulic thrust bearing according to Claim 1, **characterized in that** the reservoir (30) comprises an elastic casing (32) forming a spring which tends to return the fluid to the compression chamber (22).

3. Hydraulic thrust bearing according to Claim 2, **characterized in that** it comprises a partition (10) separating the compression chamber (22) from the reservoir (30), receiving on each side on its contour the edge of the flexible outer wall (24) of the compression chamber (22), and of the elastic casing (32) of the tank (30).

4. Hydraulic thrust bearing according to Claim 3, **characterized in that** the partition (10) contains the inertia column forming the brake fluid passage (34).

5. Hydraulic thrust bearing according to any one of the preceding claims, **characterized in that** the flexible outer wall (24) of the compression chamber (22) comprises a flexible protrusion facing outwards (26) receiving the axial compression force (F).

6. Hydraulic thrust bearing according to any one of the preceding claims, **characterized in that** the compression chamber (22) includes an internal elastomer buffer (28) for stopping the end of travel.

7. Hydraulic thrust bearing according to any one of the preceding claims, **characterized in that** it comprises complementary restricted passages (36, 38) between the compression chamber (22) and the reservoir (30), comprising a return valve leaving a passage free to this compression chamber (22).

8. Hydraulic thrust bearing according to any one of the preceding claims, **characterized in that** it comprises a pressure limiting valve in the compression chamber (22), directing an overpressure towards the reservoir (30).

9. Hydraulic thrust bearing according to any one of the preceding claims, **characterized in that** it comprises a decoupling membrane (40) having low stiffness, separating the compression chamber (22) from the reservoir (30), which is arranged between two thrust bearings axial.

10. Motor vehicle equipped with suspensions, **characterized in that** these suspensions comprise hydraulic stops according to any one of the preceding claims.
